# EUROPÄISCHE PATENTSCHRIFT

(11) **EP 1 179 684 B1**
(45) Veröffentlichungstag und Bekanntmachung des Hinweises auf die Patenterteilung: **18.10.2006**
(21) Anmeldenummer: 01119120.2
(22) Anmeldetag: 08.08.2001
(51) Int. Cl.: F16B 37/04, E06B 3/54, E04B 2/88, A47K 3/30, F16B 37/00

(54) **In einer Bohrung einer Glasplatte angeordnete Halterung**
Support means mounted in a hole of a glass pane
Support monté dans le trou d'une plaque de verre

(30) Priorität: 08.08.2000 DE 10042044
(43) Veröffentlichungstag der Anmeldung: 13.02.2002
(73) Patentinhaber: DORMA GmbH + Co. KG, 58256 Ennepetal (DE)
(72) Erfinder: Elmer, Hubert, 6065 Thaur (AT); Leitgeb, Peter, 6165 Telfes (AT); Müller, Elmar, 6165 Telfes (AT)

(56) Entgegenhaltungen:
- EP-A- 0 801 201
- DE-A- 4 130 823
- NL-A- 8 103 273
- US-A- 4 906 153
- US-A- 4 958 743

## Beschreibung

Die Erfindung betrifft eine Glasplatte mit einer Bohrung, in der eine ein Innengewinde aufweisende, zylindrische Halterung für den Anschluss von Anbauteilen angeordnet ist, nach Anspruch 1.

Bei den vorgenannten Anbauteilen handelt es sich zum Beispiel um Bauteile einer Unterkonstruktion, an der die Glasplatte befestigt ist, wobei im Regelfall beispielsweise bei der Gestaltung von Fassaden die Glasplatten als Verbundglasscheiben ausgebildet sind.

Die Erfindung zielt darüber hinaus auch auf den Anschluss von Anbauteilen an Einzelglasscheiben ab, wobei die Anbauteile mit Bezug auf die Glasplatte nur eine bedingte oder keine tragende Funktion haben, beispielsweise auf den Anschluss von Handläufen, Handgriffen und dergleichen. Die Glasplatte kann dabei zum Beispiel als stationäre oder mobile Wand, Raumteiler, Duschwand oder dergleichen verwendet werden.

Eine gattungsgemäße Vorrichtung offenbart die DE 39 089 83 A1 bei einem Glasbauelement für eine Ganzglasfassade unter Verwendung einer zwei Einzelscheiben umfassenden Verbundglasscheibe. Zum Anschluss an eine Unterkonstruktion weist die innere Glasscheibe eine Bohrung auf, in die ein Schraubverbindungselement eingesetzt ist, welches sich mit einem scheibenförmigen Teil zwischen den beiden Einzelscheiben abstützt. Die auf das Schraubverbindungselement einwirkenden Kräfte werden so zwangsläufig auf die Verbindung der Einzelscheiben übertragen.

Kegelkopfförmige Halterungen, die in eine Bohrung in der inneren Scheibe einer aus zwei Scheiben bestehenden Verbundglasscheibe eingreifen, sind aus der DE 87 016 93 U1 und der WO 96/22443 bekannt, wobei bei der WO 96/22443 zusätzliche Vorrichtungen zur Einbringung eines Gießharzes zur Verbindung der benachbarten Scheiben und zur Einbettung der Halterung vorgesehen sind. Auch hierbei werden die auf die Halterung wirkenden Kräfte auf die Verbindung der Einzelscheiben übertragen.

Die EP 0 595 062 A1 befasst sich ebenfalls mit dem Anschluss einer Verbundglasscheibe an eine Unterkonstruktion, wobei in einer Sackbohrung der inneren Scheibe ein spreizbares Schraubverbindungselement verspannt wird. Dabei treten ebenfalls die vorbeschriebenen Nachteile auf.

Bei einer Isolierglasscheibe mit Doppelverglasung gemäß EP 0 552 101 A1 ist es bekannt, die Unterkonstruktion an die innere Scheibe anzuschließen, wobei Gewindebolzen der Unterkonstruktionen in Bohrungen der inneren Scheibe einfassen, die durch miteinander verschraubbare Muttern unter Zwischenlage von Dichtungen verschlossen werden.

Die EP 0 647 760 A2 beschreibt ein Befestigungselement zur Verankerung in insbesondere aus Glas bestehenden Platten, bei dem ein Bestandteil der Unterkonstruktion bildendes Spreizelement mittels eines Spreizkonus in einem eine Hinterschneidung aufweisenden Sackloch der Glasscheibe verankerbar ist. Auch hierbei müssen zwangsläufig infolge des Spreizvorganges Scherkräfte in die Sackbohrung eingeleitet werden.

Durch die DE 198 08 628 A1 ist eine Vorrichtung zur Befestigung von Muttern in der Art einer Annietmutter an einer Fahrzeugstruktur bekannt geworden, bei der die Mutter selbst außerhalb einer in einer Anschlussstruktur vorgesehenen Bohrung angeordnet ist und mit einem einstückig an die Mutter angeformten hülsenartigen Verbindungsteil in die vorgenannte Bohrung einfasst. Zur Erzielung einer Axialsicherung kann am hülsenförmigen Mantel des Verbindungsteiles mittels eines geeigneten Stauchwerkzeuges ein Bördelrand angeformt sein, derart, dass sich am Verbindungsteil mit Bezug auf die Bohrung in der Anschlussstruktur eine Hinterschneidung ergibt.

Aufgabe der Erfindung ist es, eine Glasplatte mit einer Bohrung, in der eine ein Innengewinde aufweisende zylindrische Halterung für den Anschluss von Anbauteilen angeordnet ist dahingehend zu verbessern, dass bei Anwendung, insbesondere von Einzelscheiben, eine glatte und fluchtende Außenfläche der Scheibe unter Vermeidung überstehender Bauteile gewährleistet ist, dass durch die auf die Halterung wirkenden Kräfte keine unzulässigen Spannungen in die Scheibe eingeleitet werden und dass mit baulich einfachen Mitteln eine einfache Montage ermöglicht wird.

Die Erfindung löst die gestellte Aufgabe mit der Lehre nach Anspruch 1. Die dort vorgeschlagene konzentrische Hinterschneidung der Halterung gewährleistet einen zug- und druckfesten Presssitz der Halterung innerhalb der Bohrung der Glasplatte, wozu die Bohrung in der Glasplatte komplementär verlaufende Flächen aufweisen kann. Es besteht jedoch auch die Möglichkeit, die Bohrung in der Glasplatte zylindrisch auszubilden und den durch die Hinterschneidung entstehenden Hohlraum, beispielsweise mit Gießharz, auszugießen.

Weitere Merkmale der Erfindung sind durch die Unteransprüche gekennzeichnet.

Nach einem besonderen Merkmal der Erfindung wird die Hinterschneidung durch einen an einer Stirnfläche der Halterung angeformten Kragen und einen an der gegenüberliegenden Stirnfläche anformbaren Kragen gebildet. Gemäß dieser Lehre kann die Halterung in Form eines Halbzeuges in das Bohrloch eingeführt und der zweite Kragen mittels eines geeigneten Werkzeuges angeformt werden.

Hierbei findet bevorzugt als Material für die Halterung entsprechend verformbares Aluminium oder entsprechend verformbarer Kunststoff Verwendung. Alternativ kann jedoch die Halterung aus Gießharz bestehen, so dass beide Kragen an die komplementären Flächen der Bohrung angegossen werden können.

Das für den Anschluss eines Bauteiles erforderliche Innengewinde kann wahlweise in einer Durchgangsbohrung oder Sackbohrung der Halterung angeordnet sein, wobei das Innengewinde in das Material der Halterung - beispielsweise Aluminium - unmittelbar eingeschnitten sein oder Bestandteil einer in die Halterung einsetzbaren Buchse, vorzugsweise einer Metallbuchse sein kann. Der Einsatz einer Metallbuchse bietet den Vorteil einer höheren Festigkeit mit Bezug auf das Gewinde und lässt den Einsatz handelsüblicher metrischer Schrauben zu.

Die Anbauteile können zum Beispiel Bauteile einer Unterkonstruktion sein, an der die Glasplatte befestigt ist, wobei im Regelfall beispielsweise bei der Gestaltung von Fassaden die Glasplatten als Verbundglasscheiben ausgebildet sind. Die Erfindung zielt darüber hinaus auch auf den Anschluss von Anbauteilen an Einzelglasscheiben ab, wobei die Anbauteile mit Bezug auf die Glasplatte nur eine bedingte oder keine tragende Funktion haben, beispielsweise auf den Anschluss von Handläufen, Handgriffen und dergleichen. Die Glasplatte kann dabei zum Beispiel als stationäre oder mobile Wand, Raumteiler, Duschwand oder dergleichen verwendet werden.

Die Erfindung wird nachfolgend anhand von sechs Ausführungsbeispielen näher erläutert. Es zeigen:
- Figur 1 - 4:: Ein erstes Ausführungsbeispiel mit in das Material der Halterung eingeschnittenem Innengewinde.
- Figur 5:: Ein zweites Ausführungsbeispiel gemäß Figur 4 unter Verwendung einer Sackbohrung.
- Figur 6 + 7:: Ein drittes Ausführungsbeispiel unter Verwendung einer eingesetzten Buchse.

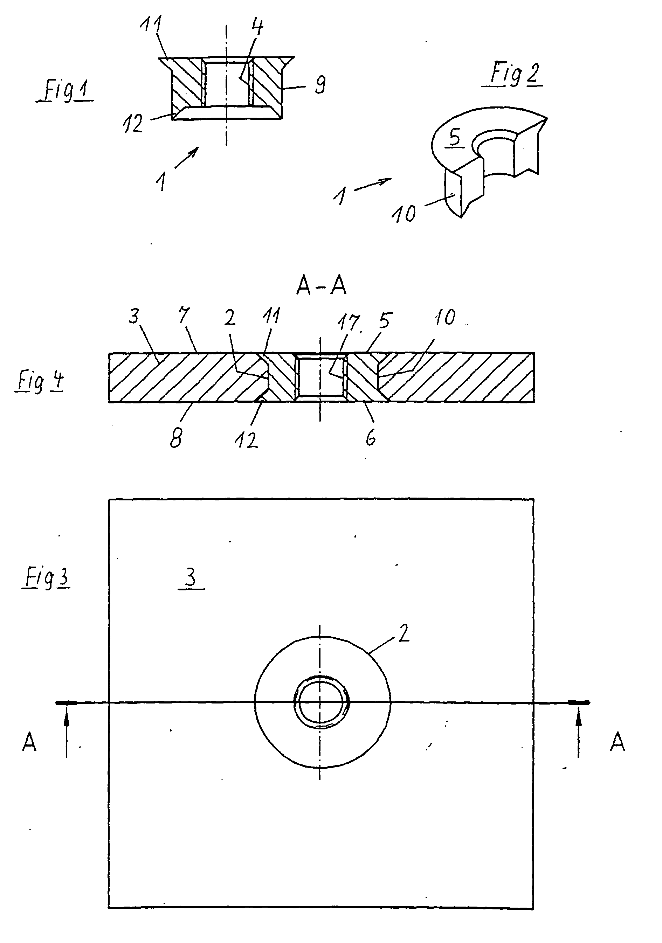

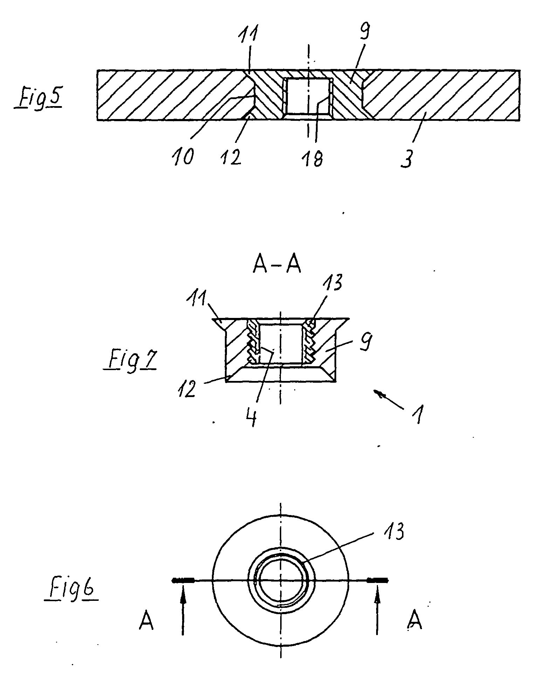

Eine allgemein mit 1 bezeichnete Halterung, gemäß Figur 1 - 4 besteht beispielsweise aus Aluminium und ist in eine Bohrung 2 einer Glasplatte 3 einsetzbar. Ein Innengewinde 4 ist in die Halterung 1 eingeschnitten. In der Figur 1 ist die Halterung 1 als Halbzeug dargestellt und weist im Bereich einer oberen Stirnfläche 5 einen angeformten Kragen 11 auf. Nach Einführen der Halterung 1 in die Bohrung 2 wird mittels eines geeigneten Werkzeuges ein im Bereich der gegenüberliegenden Stirnfläche 6 angeordneter zweiter anformbarer Kragen 12 gegen die entsprechende Komplementärfläche der Bohrung 2, wie in Figur 4 dargestellt, angepresst. Die Stirnflächen 5 und 6 der Halterung 1 verlaufen dabei bündig mit Oberflächen 7 und 8 der Glasplatte 3. Durch die Ausgestaltung der Kragen 11 und 12 ergibt sich eine mit 10 bezeichnete Hinterschneidung.

Das Ausführungsbeispiel nach Figur 5 entspricht dem Ausführungsbeispiel nach Figur 4 mit der Ausnahme, dass in Figur 4 eine Durchgangsbohrung 17 und in Figur 5 eine Sackbohrung 18 vorgesehen ist.

Im Ausführungsbeispiel nach Figur 6 und 7 ist in den beispielsweise aus Aluminium bestehenden Mantel 9 der Halterung 1 eine aus Metall bestehende Buchse 13 eingeschraubt, die ihrerseits das Innengewinde 4 aufweist.

### Bezugszeichenliste

- 1: Halterung
- 2: Bohrung
- 3: Glasplatte
- 4: Innengewinde
- 5: Stirnfläche
- 6: Stirnfläche
- 7: Oberfläche
- 8: Oberfläche
- 9: Mantel
- 10: Hinterschneidung
- 11: angeformter Kragen
- 12: anformbarer Kragen
- 13: Buchse
- 17: Durchgangsbohrung
- 18: Sackbohrung

## Patentansprüche

1. Glasplatte (3) mit einer Bohrung (2), in der eine ein Innengewinde (4) aufweisende zylindrische Halterung (1) für den Anschluss von Anbauteilen angeordnet ist, wobei beide Stirnflächen (5, 6) der Halterung (1) fluchtend mit Oberflächen (7, 8) der Glasplatte (3) verlaufen, und dass am Mantel (9) der Halterung (1) zwischen den Stirnflächen (5, 6) eine konzentrische Hinterschneidung (10) angeordnet ist, die zug- und druckfest an komplementär verlaufenden Flächen der Bohrung (2) angeordnet ist, **dadurch gekennzeichnet, dass** die Hinterschneidung (10) durch einen an einer Stirnfläche (5) der Halterung (1) angeformten Kragen (11) und einen an der gegenüberliegenden Stirnfläche (6) nach Einführung der Halterung (1) in die Bohrung (2) durch Verformen der Halterung (1) gegen die Komplementärfläche der Bohrung angepresste Kragen (11) ausgebildet ist.

2. Glasplatte mit einer zylindrischen Halterung (1) nach Anspruch 1, **dadurch gekennzeichnet, dass** die Halterung (1) aus einem plastisch verformbaren Material wie Aluminium oder Kunststoff besteht.

3. Glasplatte mit einer zylindrischen Halterung (1) nach einem der Ansprüche 1 bis 2, **dadurch gekennzeichnet, dass** die Halterung (1) aus Gießharz (14) besteht.

4. Glasplatte mit einer zylindrischen Halterung (1) nach einem der Ansprüche 1 bis 3, **dadurch gekennzeichnet, dass** das Innengewinde (4) in einer Durchgangsbohrung (17) oder Sackbohrung (18) der Halterung (1) angeordnet ist.

5. Glasplatte mit einer zylindrischen Halterung (1) nach einem der Ansprüche 1 bis 4, **dadurch gekennzeichnet, dass** das Innengewinde (4) in das Material der Halterung (1) eingeschnitten ist.

6. Glasplatte mit einer zylindrischen Halterung (1) nach einem der Ansprüche 1 bis 5, **dadurch gekennzeichnet, dass** das Innengewinde (4) in einer in das Material der Halterung (1) einsetzbaren Buchse (13), vorzugsweise einer Metallbuchse, angeordnet ist.

7. Glasplatte mit einer zylindrischen Halterung (1) nach einem der Ansprüche 1 bis 6, **dadurch gekennzeichnet, dass** die Halterung (1) in Glasplatten (3) angeordnet ist, die als Fassadenelement, stationäre oder mobile Wand, Raumteiler, Duschwand oder dergleichen einsetzbar sind.

## Claims

1. A glass pane (3) having a bore (2), wherein a cylindrical mount (1) having a female thread (4) is disposed for connecting mounting parts, both end faces (5, 6) of the mount (1) extending flush with surfaces (7, 8) of the glass pane (3), and in that a concentric undercut (10) is disposed at the envelope (9) of the mount (1) between the end faces (5, 6), which undercut is disposed at complementary extending surfaces of the bore (2) such that it resists tension and compression, **characterized in that** the undercut (10) is formed by means of a collar (11), which is conformed to an end face (5) of the mount (1), and at the opposite end face (6) by means of a collar (12), which, once the mount (1) is inserted into the bore (2), is pressed against the complementary surface of the bore through deformation of the mount (1).

2. A glass pane with a cylindrical mount (1) according to claim 1, **characterized in that** the mount (1) consists of a plastically deformable material, such as aluminium or plastic material.

3. A glass pane with a cylindrical mount (1) according to one of the claims 1 to 2, **characterized in that** the mount (1) consists of casting resin (14).

4. A glass pane with a cylindrical mount (1) according to one of the claims 1 to 3, **characterized in that** the female thread (4) is disposed in a through bore (17) or a pocket bore (18) of the mount (1).

5. A glass pane with a cylindrical mount (1) according to one of the claims 1 to 4, **characterized in that** the female thread (4) is cut into the material of the mount (1).

6. A glass pane with a cylindrical mount (1) according to one of the claims 1 to 5, **characterized in that** the female thread (4) is provided in a bushing (13), preferably a metal bushing, which is insertable into the material of the mount (1).

7. A glass pane with a cylindrical mount (1) according to one of the claims 1 to 6, **characterized in that** the mount (1) is disposed in glass panes (3), which can be used as a façade building unit, as a stationary or movable wall, as a room divider, as a shower partitioning or the like.

## Revendications

1. Plaque en verre (3) avec un perçage (2) dans lequel est agencée une fixation (1) cylindrique ayant un taraudage (4) pour la connexion de pièces à rapporter, les deux faces terminales (5, 6) de la fixation (1) s'étendant de façon alignée avec des surfaces (7, 8) de la plaque en verre (3), et en ce qu'une contre-dépouille (10) concentrique agencée sur l'enveloppe (9) de la fixation (1) entre les faces terminales (5, 6) est agencée sur des surfaces du perçage (2) s'étendant de façon complémentaire tout en résistant à la tension et à la compression, **caractérisée en ce que** la contre-dépouille (10) est aménagée par un rebord (11), qui est formé sur une face terminale (5) de la fixation (1) et par un rebord (12) sur la face terminale (6) opposée, rebord qui, après l'insertion de la fixation (1) dans le perçage (2) est pressé contre la surface complémentaire du perçage en conséquence de la déformation de la fixation (1).

2. Plaque en verre avec une fixation (1) cylindrique selon la revendication 1, **caractérisée en ce que** la fixation (1) consiste en une matière qui est plastiquement déformable, telle que l'aluminium ou une matière plastique.

3. Plaque en verre avec une fixation (1) cylindrique selon l'une des revendications 1 à 2, **caractérisée en ce que** la fixation (1) consiste en résine coulée (14).

4. Plaque en verre avec une fixation (1) cylindrique selon l'une des revendications 1 à 3, **caractérisée en ce que** le taraudage (4) est agencé dans un trou de passage (17) ou dans un trou borgne (18) de la fixation (1).

5. Plaque en verre avec une fixation (1) cylindrique selon l'une des revendications 1 à 4, **caractérisée en ce que** le taraudage (4) est fileté dans le matériau de la fixation (1).

6. Plaque en verre avec une fixation (1) cylindrique selon l'une des revendications 1 à 5, **caractérisée en ce que** le taraudage (4) est prévu dans un manchon (13), de préférence dans un manchon en métal, qui peut être inséré dans le matériau de la fixation (1).

7. Plaque en verre avec une fixation (1) cylindrique selon l'une des revendications 1 à 6, **caractérisée en ce que** la fixation (1) est agencée dans des plaques en verre (3) qui peuvent être employées comme élément de façade, comme paroi stationnaire ou mobile, comme cloison de séparation, comme cloison pour une douche ou similaire.
